**Europäisches Patentamt**

**European Patent Office**

**Office européen des brevets**

(11) Veröffentlichungsnummer: **0 114 694**
**B1**

(12) **EUROPÄISCHE PATENTSCHRIFT**

(45) Veröffentlichungstag der Patentschrift:
18.05.88

(21) Anmeldenummer: 84100636.4

(22) Anmeldetag: 21.01.84

(51) Int. Cl.⁴: **H 04 N 11/00**

(54) System zur Übertragung eines breitbandigen Farbvideosignals.

(30) Priorität: 25.01.83 DE 3302285

(43) Veröffentlichungstag der Anmeldung:
01.08.84 Patentblatt 84/31

(45) Bekanntmachung des Hinweises auf die Patenterteilung:
18.05.88 Patentblatt 88/20

(84) Benannte Vertragsstaaten:
**DE FR GB NL**

(56) Entgegenhaltungen:
**EP-A-0 113 933**

**I.E.E.E. SPECTRUM, Band 20, Nr. 12, Dezember 1983,
NEW York, USA; R.K. JURGEN "The problems and
promises of high-definition television", Seiten 46-51**

(73) Patentinhaber: **ROBERT BOSCH GMBH, Postfach
50, D-7000 Stuttgart 1 (DE)**

(72) Erfinder: **Reimers, Ulrich, Dr. Ing., Im Steinig 16,
D-6105 Ober- Ramstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einem System zur Übertragung eines breitbandigen und hochzeiligen Farbvideosignals in Zeitmultiplex. Unter einem breitbandigen Farbvideosignal soll insbesondere ein von einer hochauflösenden Farbfernsehkamera, welche z. B. mit doppelter Zeilenzahl betrieben wird, erzeugtes Bildsignal verstanden werden, wobei die Bildauflösung sowohl in horizontaler als auch in vertikaler Bildrichtung erhöht sein soll.

Weltweit wird die Einführung eines Fernsehsystems mit gegenüber dem derzeitigen System deutlich erhöhter Auflösung angestrebt. Bisher existierende Vorschläge für solche neuartigen Verfahren gehen nahezu ausschließlich von der Nutzung sehr breitbandiger, derzeit noch nicht existierender Übertragungskanäle aus. Parallel dazu wird international intensiv über die Einführung von Fernsehsystemen zur Direktübertragung von Signalen geostationärer Satelliten zum Teilnehmer diskutiert. Von hoher Priorität sind dabei derzeit Verfahren, in denen das Luminanz- und das Chrominanzsignal im Zeitmultiplex übertragen werden (s. z. B. das sogen. MAC-Verfahren oder das von der Anmelderin in der DE-A1-3 339 533 beschriebene Verfahren). Die bei diesen Zeitmultiplex-Verfahren z. Zt. angestrebte Auflösung im Fernsehbild soll jedoch gegenüber der bei derzeitigen Übertragungsverfahren nicht wesentlich vergrößert werden.

In der älteren, nicht vorveröffentlichten EP-A1-113 933 ist bereits ein Fernsehübertragungssystem beschrieben, bei welchem von einem hochzeiligen und breitbandigen Fernsehsignal zwei Fernsehsignale konventioneller Zeilenzahl abgeleitet werden, von denen das eine beispielsweise ein Standardsignal gemäß PAL-Norm und das andere ein breitformatiges Signal ist. Die Erzeugung dieser beiden, zur Übertragung über zwei Fernsehkanäle herkömmlicher Bandbreite geeigneter Fernsehsignale erfolgt im Prinzip durch zeilenweise abwechselndes Zuführen der Signalinformation zu den beiden Fernsehkanälen. Bei diesem System kann jedoch nur ein Fernsehsignal eines Kanals mit herkömmlichen Fernsehempfängern empfangen werden. Außerdem ist das nach der Übertragung aus den beiden Fernsehkanalsignalen im HDTV-Empfänger wieder zusammengefügte hochzeilige Fernsehsignal in seiner H-Auflösung im Vergleich zu seiner V-Auflösung deutlich vermindert und beinhaltet weiterhin die Signaldefekte des PAL-Verfahrens.

Der vorliegenden Erfindung liegt daher die Aufgabe zugrunde, ein System der eingangs genannten Art anzugeben, mit dem es bei unverändertem Fernseh-Kanalraster möglich ist, ein Bild hoher Auflösung zu übertragen.

### Vorteile der Erfindung

Das erfindungsgemäße System gemäß dem unabhängigen Anspruch 1 hat den Vorteil, daß hiermit sowohl ein Fernsehbild hoher Auflösung nahezu ohne Qualitätsverluste über zwei herkömmliche Fernsehkanäle als auch ein Fernsehbild normaler Auflösung über jeden einzelnen dieser Kanäle übertragen werden kann.

Durch die in den abhängigen Ansprüchen aufgeführten Maßnahmen sind vorteilhafte Weiterbildungen und Verbesserungen des im Anspruch 1 angegebenen Systems möglich. Besonders vorteilhaft ist, daß die Entnahme der Abtastwerte für die Übertragung so erfolgt, daß die Bewegungsauflösung im Bild nicht beeinträchtigt wird. Als weiterer Vorteil ist anzusehen, daß ohne Verwendung eines Bildspeichers und/oder Bewegungsdetektors im Empfänger ein hochaufgelöstes Bild in unveränderter Bewegungsauflösung erzeugt werden kann.

### Zeichnung

Ausführungsbeispiele der Erfindung sind in der Zeichnung dargestellt und in der nachfolgenden Beschreibung näher erläutert. Es zeigen:

Fig. 1 ein Blockschaltbild zur Erzeugung des Videosignals zur zweikanaligen Übertragung,

Fig. 2 das Signalformat für die zweikanalige Übertragung,

Fig. 3 ein Blockschaltbild eines Empfängers für das einkanalige Videosignal,

Fig. 4 ein Blockschaltbild eines Empfängers für das zweikanalige Videosignal.

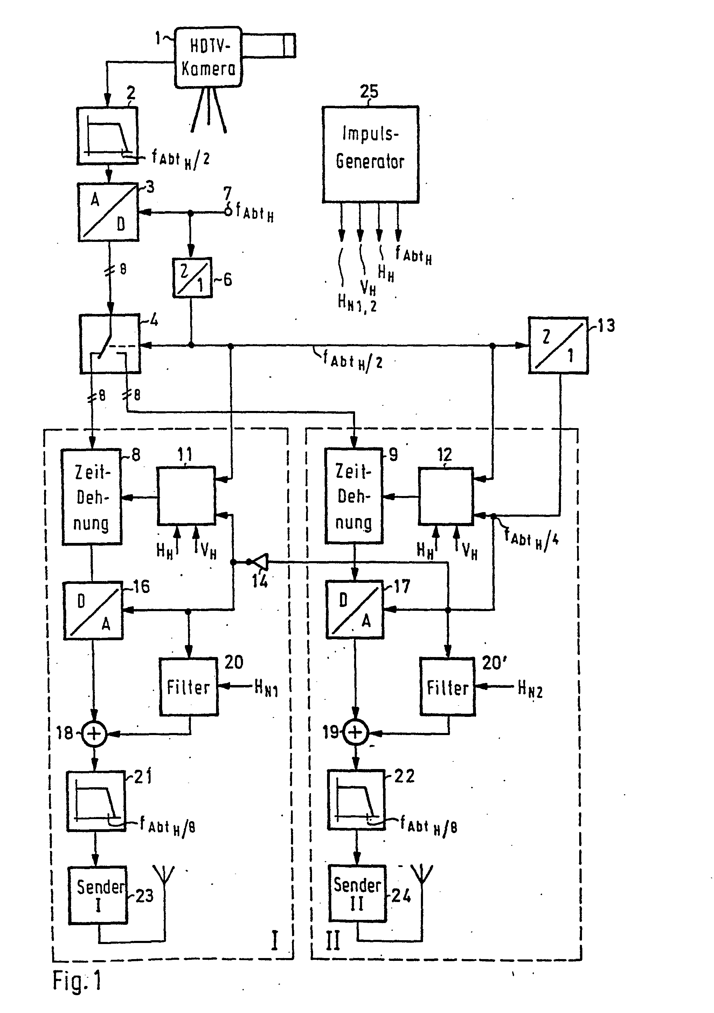

In Fig. 1 wird das von einer sogen. HDTV (High Definition Television)-Kamera 1 erzeugte hochzeilige (z. B. 1249 Zeilen bei einer Zeilendauer von 32 μs) Videosignal, welches bereits als zeitserielles Luminanz-Chrominanz-Signal aufbereitet sein soll, über ein Tiefpaßfilter 2 mit einer der halben Abtastfrequenz ($f_{Abt.H}/2$) entsprechenden Grenzfrequenz einem Analog/Digital-Wandler 3 zugeführt. In dem A/D-Wandler 3 wird es mit der hochzeiligen Abtastfrequenz $f_{Abt.H}$ digitalisiert und als 8-Bit-Signal einem Umschalter 4 zugeleitet. Dieser Umschalter 4 wird mit der halben Abtastfrequenz $f_{Abt.H}/2$ betrieben, welche mit Hilfe eines Frequenzteilers 6 von der an Klemme 7 anliegenden Abtastfrequenz $f_{Abt.H}$ im Verhältnis 2:1 geteilt wird.

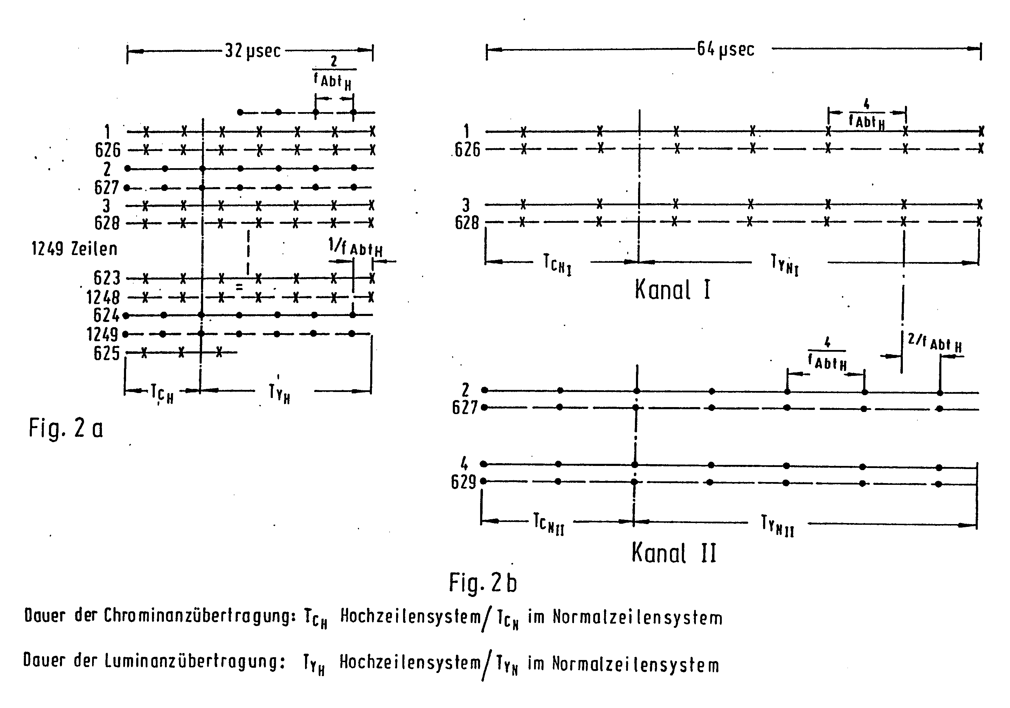

Mit dem Umschalter 4 werden die anliegenden Abtastwerte (s. Fig. 2a) alternierend auf die Kanäle I und II (s. Fig. 2b) verteilt. Im Signalformat gem. Fig. 2 sind die im Kanal 1 übertragenen Abtastwerte als Kreuze und die im Kanal II als Punkte dargestellt, wobei ferner die Zeilen des ersten Teilbildes durchgezogen und die des zweiten Teilbildes gestrichelt eingezeichnet sind. Danach werden die Abtastwerte z. B. der ersten Zeile durch das Umschalten mit der Frequenz $f_{Abt.H}/2$ alternierend an den Kanal I und den Kanal II angelegt, wobei die dem Kanal II zugeführten Abtastwerte der ersten Zeile unterdrückt und nur die dem Kanal I zugeführten Abtastwerte an die nachfolgende Verarbeitungsschaltung weitergeleitet werden. Somit wird also jeder zweite Abtastwert unterdrückt. Die Weiterleitung der Abtastwerte im Kanal I bzw. Unterdrückung der Abtastwerte im Kanal II erfolgt durch die Einschreib-/Auslese-Taktsteuerung der an die Ausgänge des Schalters 4 angeschlossenen Speichereinrichtungen 8 bzw. 9, welche eine Speicherkapazität in der Größenordnung einer Fernsehzeile haben. Die Einschreib-/Auslese-Taktsteuerung der Speicher 8 und 9 erfolgt mit Hilfe der Taktumschalter 11 und 12, welchen einerseits zum Einschreiben die Frequenz $f_{Abt.H}/2$ und andererseits zum Auslesen die Frequenz $f_{Abt.H}/4$ über einen weiteren 2 : 1-Frequenzteiler 13 zugeführt werden. Die Taktumschalter 11 und 12 werden zeilenweise mit der Horizontalfrequenz des Hochzeilensystems betätigt. Somit wird beispielsweise die erste Zeile innerhalb von 32 µs in den Speicher 8 eingeschrieben. Gleichzeitig mit dem Einschreiben beginnt der Auslesevorgang des Speichers, welcher jedoch durch Halbierung der Auslesetaktfrequenz in der doppelten Zeit, also 64 µs, ausgelesen wird. Nach dem vollständigen Einschreiben der ersten Zeile in den Speicher 8 wird der Schalter 4 umgeschaltet, so daß die zweite Zeile innerhalb der nächsten 32 µs - währenddessen der Speicher 8 noch ausgelesen wird - in den Speicher 9 eingeschrieben werden kann. Auch hierbei beginnt gleichzeitig der Auslesevorgang der zweiten Zeile, so daß während dieses Zeitintervalls gleichzeitig die zweite Hälfte der ersten Zeile ausgelesen, die zweite Zeile vollständig eingeschrieben und die erste Hälfte der zweiten Zeile ausgelesen wird. Im nachfolgenden 32 µs dauernden Zeitintervalls wird nun die dritte Zeile in den Speicher 8 vollständig eingeschrieben, gleichzeitig die erste Hälfte der dritten Zeile und die zweite Hälfte der zweiten Zeile zeitgedehnt ausgelesen. Diese 32 µs dauernden Einschreib-Auslese-Vorgänge wechseln nun zur Übertragung der vollständigen Halbbilder wie oben beschrieben ab. Die Zeilenanfänge der zu überträgenden Signale in den Kanälen I und II sind somit um jeweils 32 µs gegeneinander versetzt, was jedoch in Fig. 2b der Übersichtlichkeit halber nicht dargestellt ist.

Um neben der auf diese Weise erhöhten Vertikalauflösung auch eine erhöhte Horizontalauflösung zu erzielen, werden die innerhalb der in Kanal I bzw. II übertragenen Zeilen verwendeten Bildpunktinformation aus Abtastwerten gewonnen, die innerhalb eines Kanals den zeitlichen Abstand $2/f_{Abt.H}$ voneinander haben, von Kanal zu Kanal jedoch um $1/f_{Abt.H}$ versetzt sind. Innerhalb eines Kanales liegen die Abtastwerte daher orthogonal zueinander, von Kanal zu Kanal jedoch im "Offset" eines halben Bildpunktes. Um die Phasenanpassung der über den einen Kanal übertragenen Bildpunktfolge an die im anderen Kanal übertragenen zu gewährleisten, ist ein Inverter 14 vorgesehen. Die mit einer solchen Anordnung erzielbare Auflösung, speziell der Auflösungsgewinn gegenüber einem auch von Kanal zu Kanal orthogonalen Abtastraster kann folgender Veröffentlichung entnommen werden: Reimers, U., "Farbfilter-Strukturen für Fernsehkameras mit einem Halbleiter-Bildsensor", Fernseh- und Kinotechnik 36 (1982), Heft 8, S. 299 bis 305. Durch die Offset-Anordnung der Bildpunkte auch innerhalb eines Teilbildes des Hochzeilen-Systems treten Probleme in bewegten Szenen nicht auf. Für das vorgeschlagene System ist außerdem das Verhältnis der für die Chrominanzübertragung bzw. für die Luminanzübertragung genutzten Zeiten ($T_{CH}/T_{YH}$) ohne Belang. Das vorgeschlagene System funktioniert daher für alle derzeit diskutierten Zeitmultiplex-Systeme, unabhängig z. B. auch vom Bildseitenverhältnis.

Die von den Speichereinrichtungen 8 bzw. 9 abgegebenen Videosignale werden mit Hilfe der D/A-Wandler 16 bzw. 17 analogisiert und je einer Addierstufe 18 bzw. 19 zugeführt. In diesen wird dem jeweiligen Videosignal ein von der Frequenz $f_{Abt.H}/4$ mit Hilfe je eines Filters 20 bzw. 20' abgeleitetes und mit der Horizontalfrequenz des Normalzeilensystems $H_{N1}$ bzw. $H_{N2}$ zeitlich abgestimmtes Referenzsignal in der Austastlücke zugesetzt. Diese Referenzsignale dienen im hochauflösenden Empfänger dazu, die exakte Anpassung der Grundlaufzeiten beider Kanäle sowie eine phasenrichtige Neuabtastung der Signale beider Übertragungswege zu ermöglichen. Die so behandelten Videosignale der Kanäle I und II werden noch über je einen Tiefpaß 21 bzw. 22 mit der Grenzfrequenz $f_{Abt.H}/8$ je einem Sender 23 bzw. 24 zugeführt, von welchen sie danach terrestrisch oder über Satellit an die Empfänger übertragen werden können.

Zur Versorgung der in dem Blockschaltbild dargestellten Schaltungseinheiten mit den angegebenen Impulssignalen ist ein Impulsgenerator 25 vorgesehen, welcher die benötigten Impulssignale, wie $f_{Abt.H}$ usw., abgibt.

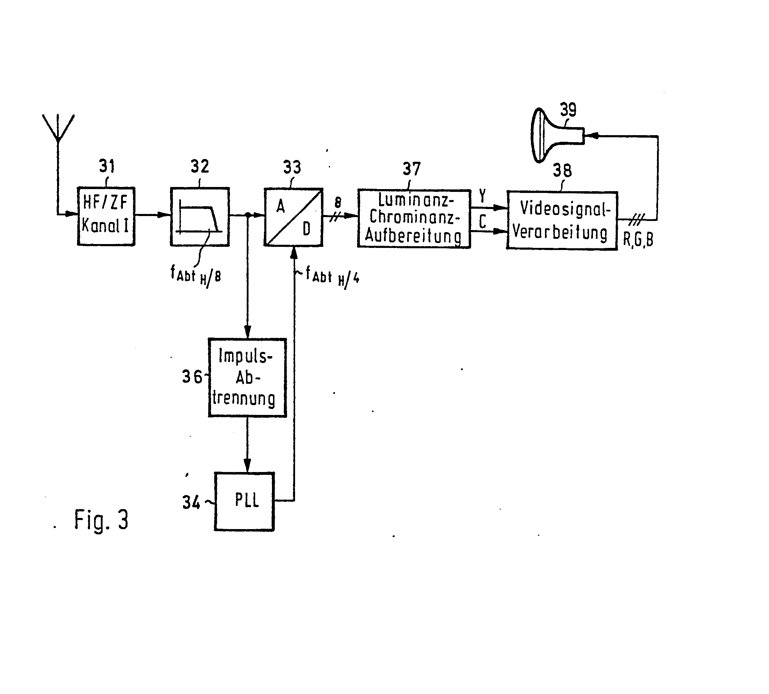

Das in Fig. 3 dargestellte Blockschaltbild eines Empfängers für die Wiedergabe eines Fernsehbildes herkömmlicher Zeilenzahl enthält einen Empfangsteil 31, in welchem das zugeführte Videosignal eines Übertragungskanals hochfrequenzmäßig verarbeitet und demoduliert wird. Das Ausgangssignal dieses Teils 31 wird über einen Tiefpaß 32 mit der Grenzfrequenz $f_{Abt.H}/8$ einem A/D-Wandler 33 zugeführt, in welchem es digitalisiert wird. Die Abtastfrequenz $f_{Abt.H}/4$ für den A/D-Wandler 33 wird mit Hilfe einer Phasenvergleichsschaltung 34 erzeugt, welche durch das vom Videosignal in einer Impulsabtrennschaltung 36 entnommene Referenzsignal synchronisiert wird. Das vom A/D-Wandler 33 abgegebene 8-Bit-Videosignal wird danach in einer Luminanz/Chrominanz-Verarbeitungsstufe 37 aufbereitet und D/Agewandelt. Hierbei kann auch gleich die bei der Luminanz-Chrominanz-Trennung notwendige Dekompression der in Zeitmultiplex übertragenen Signale vorgenommen werden. Am Ausgang der Stufe 37 sind dann die Luminanz- und die Chrominanzkomponente des Videosignals abnehmbar, welche nach weiterer Verarbeitung zur Erzeugung der Farbartsignale R,G,B in der Stufe 38 der Bildwiedergaberöhre 39 zugeführt werden.

Ein solcher Empfänger kann nahezu ohne Beeinträchtigung ein Fernsehbild der üblichen Auflösung in horizontaler und vertikaler Richtung erzeugen. Eine geringfügige Beeinträchtigung der Signalqualität kann nur bei bestimmten kritischen Bildvorlagen daraus resultieren, daß durch die Aufteilung benachbarter Zeilen der hochauflösenden Kamera 1 auf zwei Kanäle I und II eine anisotrope Abtastung in vertikaler Richtung erfolgt. Auch diese geringfügige Beeinträchtigung läßt sich dann vermeiden, wenn auf der Senderseite gem. Fig. 1 für jeden Kanal eine Interpolation aus benachbarten Zeilen zur Errechnung der in den einzelnen Kanälen übertragenen Informationen vorgenommen wird.

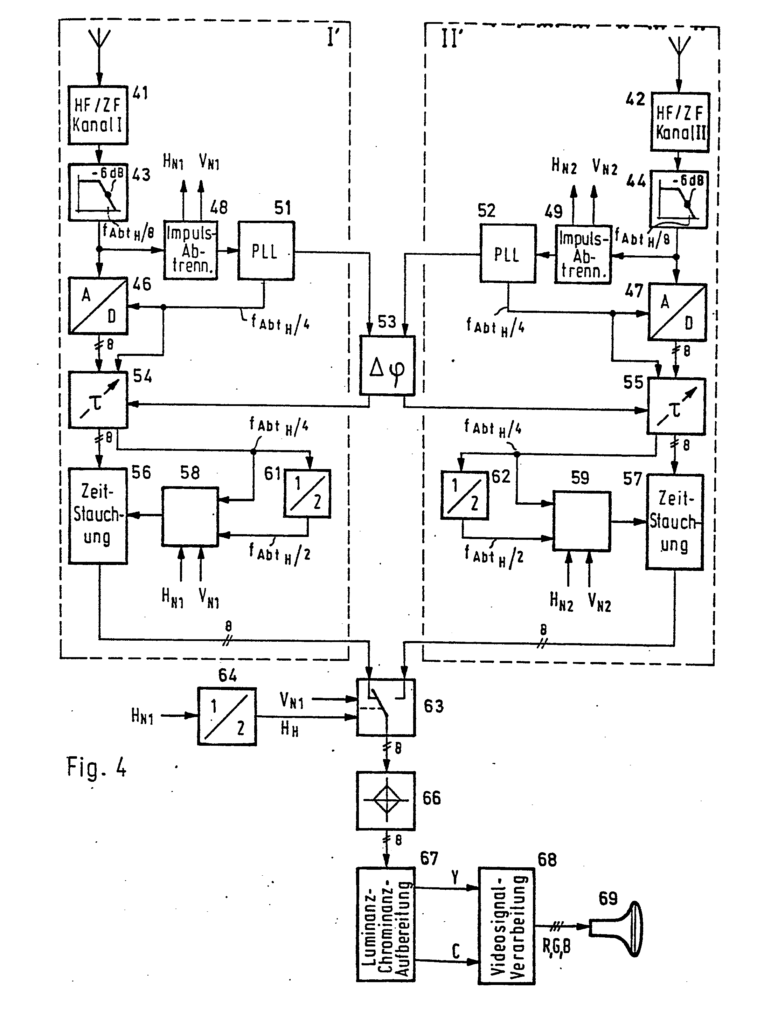

Das Blockschaltbild gem. Fig. 4 zeigt einen Empfänger für den Empfang hochaufgelöster Fernsehbilder bei Nutzung beider Übertragungskanäle. Die beiden Empfangskanäle I' und II' sind weitestgehend symmetrisch aufgebaut. Beide Kanäle I' und II' enthalten je ein Empfangsteil 41 bzw. 42 sowie daran anschließend je einen Tiefpaß 43 bzw. 44 mit Nyquist-Flanke ($- 6dB$-Punkt bei $f_{Abt.H}/8$). Danach ist je ein A/D-Wandler 46 und 47 zur Digitalisierung der Videosignale vorgesehen. Durch je eine Impuls-Abtrennschaltung 48, 49 sowie je eine Phasenvergleichsschaltung 51 und 52 werden die zur Signalaufbereitung benötigten Steuerimpulse $f_{Abt.H}/4$, $H_{N1, N2}$, und $V_{N1, N2}$ erzeugt.

Außerdem wird von den Phasenvergleichsschaltungen 51 und 52 je ein Signal abgenommen, welches einer weiteren Phasenvergleichsschaltung 53 zur Erzeugung zweier Regelsignale zugeführt wird. Diese Regelsignale werden je einem in den Videosignalwegen beider Kanäle angeordneten steuerbaren Laufzeitgliedern 54 und 55 zur Anpassung der unterschiedlichen Grundlaufzeiten beider Übertragungswege zugeführt. Eine Anpassung nur eines Kanales gegen den anderen ist ebenfalls denkbar.

Die in ihrer Laufzeit korrigierten Videosignale beider Kanäle I' und II' werden nun je einer Zeitkompressionsstufe 56 und 57 zugeleitet, in denen die auf dem Übertragungsweg 64 µs dauernden Zeilen auf 32 µs verkürzt werden. Dazu werden die aus je einer Speichereinrichtung bestehenden Stufen 56 und 57 über die Umschalter 58 und 59 von der Einschreib ($f_{Abt.}/4$) und Auslesetaktfrequenz ($f_{Abt.H}/2$) entsprechend gesteuert, wobei die Auslesetaktfrequenz durch Verdoppelung in den Vervielfacherstufen 61 und 62 der Einschreib-Taktfrequenz gewonnen wird. Die so komprimierten Signale werden durch einen geeignet angesteuerten Umschalter 63 in die der Senderseite entsprechende Reihenfolge gebracht und stehen am Ausgang des Schalters 63 damit als ein Signal hoher Zeilenzahl zur Verfügung. Die Umschaltfrequenz des Schalters 63 wird aus der Horizontalfrequenz der Normalzeilenzahl durch Verdoppelung mit Hilfe der Vervielfacherstufe 64 gewonnen. Zur Ausnutzung der ebenfalls erhöhten Horizontalauflösung schließt sich an den Schalter 63 ein planarer Tiefpaß 66 an.

Bei geeigneter Auslegung dieses Tiefpasses 66 beinhaltet sein Ausgangssignal eine Vertikalauflösung, die dem doppelten Wert des Standardkanals entspricht. Ebenso verdoppelt wurde auch die horizontale Auflösung. Für Diagonalstrukturen bestimmten Neigungswinkels wurde die resultierende Auflösung allerdings reduziert.

Das Ausgangssignal des planaren Tiefpasses 66 wird nun in einer Luminanz/Chrominanz-Verarbeitungsstufe 67 aufbereitet und D/Agewandelt. Am Ausgang der Stufe 67 sind dann die Luminanz- und die Chrominanzkomponenten des Videosignals abnehmbar, welche nach weiterer Verarbeitung zur Erzeugung der Farbartsignale R,G,B in der Stufe 68 der Bildwiedergaberohre 69 zur Wiedergabe des hochzeiligen Signals zugeführt wird.

## Patentansprüche

1. System zur Übertragung eines breitbandigen und hochzeiligen, die Luminanz- und die Chrominanzinformation innerhalb einer Zeile in Zeitmultiplex enthaltenden Farbvideosignals über zwei getrennte Fernsehkanäle (I, II) herkömmlicher Bandbreite, wobei die Signale jedes derbeiden Kanäle zur Bilddarstellung mit konventioneller Auflösung genutzt werden können, indem den beiden Fernsehkanälen (I, II) zeilenweise abwechselnd, vom hochzeiligen Farb-Videosignal abgeleitete Bildpunktinformationen zugeführt werden, welche jeweils aus in horizontaler Richtung um eine Bildpunktdauer gegeneinander versetzt entnommenen Abtastwerten des digitalisierten Farbvideosignals stammen.

2. System nach Anspruch 1, dadurch gekennzeichnet, daß die Bildpunktinformationen aus Abtastwerten gewonnen werden, welche jeweils innerhalb eines Kanals orthogonal zueinander liegen, gegenüber dem jeweils anderen Kanal jedoch um eine Bildpunktdauer versetzt sind.

3. System nach Anspruch 1, dadurch gekennzeichnet, daß jedem der über die beiden Fernsehkanäle (I, II) zu übertragenden Farbvideosignale in der Austastlücke ein Referenzsignal zur Synchronisation zugemischt wird.

4. System nach Anspruch 3, dadurch gekennzeichnet, daß das Referenzsignal von der das Farb-Videosignal abtastenden Abtastfrequenz abgeleitet und mit der H-Frequenz jedes der beiden konventionellen Fernsehkanalsignale zeitlich abgestimmt ist.

5. System nach Anspruch 3 und 4, dadurch gekennzeichnet, daß beim Empfang der Farbvideosignale für jeden Fernsehkanal eine digitale Signalverarbeitungseinrichtung zur Dekompression des Zeitmultiplex-Farbvideosignals vorgesehen ist und daß die Abtastfrequenz für den zugehörigen A/D-Wandler mit der aus dem Referenzsignal abgeleiteten Taktfrequenz synchronisiert wird.

6. System nach Anspruch 3 und 4, dadurch gekennzeichnet, daß beim Empfang des zweikanaligen Farbvideosignals zur hochzeiligen Wiedergabe von den Referenzsignalen jedes Kanals (I', II'') je ein Signal für einen Phasenvergleich abgeleitet wird und daß beim Phasenvergleich der Signale je ein Regelsignal zur Einstellung eines in jedem Kanal angeordneten Laufzeitgliedes (54, 55) zur Phasenanpassung der beiden Farbvideosignale erzeugt wird.

7. System nach Anspruch 6, dadurch gekennzeichnet, daß das hochzeilige Farbvideosignal über einen planaren Tiefpaß (66) den weiteren Videosignalverarbeitungsstufen (67, 68) zugeführt wird.

**Claims**

1. System for transmitting a broadband, high-line colour video signal containing the luminance and chrominance information in time multiplex within a line over two separate television channels (I, II) of conventional bandwidth, the signals of each of the two channels being usable for image representation with conventional resolution, in that image spot information derived from the high-line colour video signal is supplied in line-alternating manner to the two television channels (I, II), said information resulting from scan values of the digitized colour video signal reciprocally displaced by one image spot duration in the horizontal direction.

2. System according to Claim 1, characterised in that the image spot information is obtained from scan values, which are orthogonal to one another within a channel, but displaced by in each case one image spot duration compared with the in each case other channel.

3. System according to Claim 1, characterised in that for synchronization a reference signal is mixed in the blanking interval with each of the colour video signals to be transmitted over the two television channels (I, II).

4. System according to Claim 3, characterised in that the reference signal is derived from the scan frequency scanning the colour video signal and is timed with the H-frequency of the two conventional television channel signals.

5. System according to Claims 3 and 4, characterised in that on receiving the colour video signals for each television channel, there is a digital signal processing device for decompressing the time multiplex colour video signal and that the scan frequency for the associated A/D converter is synchronized with the clock frequency derived from the reference signal.

6. System according to Claims 3 and 4, characterised in that on receiving the two-channel colour video signal for the high-line reproduction of the reference signals of each channel (I', II'), in each case one signal is derived for a phase comparison and that on the phase comparison of the signals in each case one regulating signal is produced for setting a delay element (54, 55) arranged in each channel for the phase matching of the two colour video signals.

7. System according to Claim 6, characterised in that the high-line colour video signal is supplied across a planar low-pass filter (66) to the further video signal processing stages (67, 68).

**Revendications**

1. Système de transmission d'un signal vidéo couleur à bande large et haute définition, contenant l'information de luminance et l'information de chrominance dans une ligne en mode multiplexé dans le temps, par deux canaux de télévision (I, II) séparés ayant chacun une largeur de bande habituelle, les signaux de chacun des deux canaux étant utilisés pour donner une image de résolution classique, en ce que les deux canaux de télévision (I, II) reçoivent en alternance de lignes des informations de points-image dérivées du signal vidéo couleur à haute résolution, provenant de grandeurs de détection du signal vidéo couleur, numérisé, chaque fois décalées dans la direction horizontale d'une durée de points-image.

2. Système selon la revendication 1, caractérisé en ce que les informations de points-image sont obtenues à partir des grandeurs de détection qui sont orthogonales entre elles dans un canal en étant toutefois décalées d'une durée de points-images par rapport à l'autre canal.

3. Système selon la revendication 1, caractérisé en ce qu'on ajoute un signal de référence de synchronisation à chacun des signaux vidéo couleur transmis par les deux canaux de télévision (I, II).

4. Système selon la revendication 3, caractérisé en ce que le signal de référence est dérivé de la fréquence de détection du signal vidéo couleur et est synchronisé sur la fréquence H de chacun des deux signaux des canaux de télévision classiques.

5. Système selon les revendications 3 et 4, caractérisé en ce qu'à la réception des signaux vidéo couleur, il est prévu un circuit de traitement numérique de signal pour chaque canal, pour décomprimer le signal vidéo couleur à multiplexage dans le temps et en ce que la fréquence de détection du convertisseur analogique/numérique correspondant est synchronisée sur la fréquence de cadence dérivée du signal de référence.

6. Système selon les revendications 3 et 4, caractérisé en ce qu'à la réception du signal vidéo couleur à deux canaux pour la reproduction à haute définition des signaux de référence de chaque canal (I', II'), on dérive un signal respectif pour une comparaison de phase et en ce que par la comparaison de phase des signaux, on génére un signal de réglage pour régler une ligne de retard (54, 55) associée à chaque canal pour assurer l'adaptation de phase des deux signaux vidéo couleur.

7. Système selon la revendication 6, caractérisé en ce que le signal vidéo couleur de haute définition est appliqué aux autres étages de traitement du signal vidéo (67, 68) par l'intermédiaire d'un filtre passe-bas planaire (66).

Fig. 1

Fig. 2 a

Kanal I

Fig. 2 b

Kanal II

Dauer der Chrominanzübertragung: $T_{C_H}$ Hochzeilensystem / $T_{C_N}$ im Normalzeilensystem

Dauer der Luminanzübertragung: $T_{Y_H}$ Hochzeilensystem / $T_{Y_N}$ im Normalzeilensystem

Fig. 3

Fig. 4